(19) Europäisches Patentamt
European Patent Office
Office européen des brevets

(11) **EP 1 166 496 B1**

(12) **FASCICULE DE BREVET EUROPEEN**

(45) Date de publication et mention
de la délivrance du brevet:
**26.11.2008 Bulletin 2008/48**

(51) Int Cl.:
***H04L 9/32*** *(2006.01)*

(21) Numéro de dépôt: **00917156.2**

(22) Date de dépôt: **07.04.2000**

(86) Numéro de dépôt international:
**PCT/FR2000/000890**

(87) Numéro de publication internationale:
**WO 2000/062477 (19.10.2000 Gazette 2000/42)**

(54) **PROCEDE D'AUTHENTIFICATION ET DE SIGNATURE DE MESSAGE UTILISANT DES ENGAGEMENTS DE TAILLE REDUITE ET SYSTEMES CORRESPONDANTS**

**VERFAHREN UND VORRICHTUNG ZUR AUTHENTIFIZIERUNG UND DIGITALEN SIGNATURERZEUGUNG EINER NACHRICHT, MIT DER HILFE VON KLEINEREN CHALLENGE-DATEN**

**AUTHENTICATION AND SIGNATURE METHOD FOR MESSAGES USING REDUCED SIZE OF CHALLENGE DATA AND CORRESPONDING SYSTEMS**

(84) Etats contractants désignés:
**AT BE CH CY DE DK ES FI FR GB GR IE IT LI LU MC NL PT SE**

(30) Priorité: **08.04.1999 FR 9904398**

(43) Date de publication de la demande:
**02.01.2002 Bulletin 2002/01**

(73) Titulaire: **FRANCE TELECOM**
**75015 Paris (FR)**

(72) Inventeur: **GIRAULT, Marc**
**F-14000 Caen (FR)**

(56) Documents cités:
**EP-A- 0 697 687**      **FR-A- 2 716 058**

## Description

## Domaine technique

La présente invention a pour objet un procédé d'authentification et de signature de message utilisant des engagements de taille réduite et des systèmes correspondants.

L'invention concerne le domaine de l'identification (c'est-à-dire l'authentification d'entité) ainsi que celui de l'authentification de message et de signature numérique de message, au moyen de techniques cryptographiques.

L'invention concerne plus précisément la cryptographie dite à clé publique. Dans ce domaine, l'entité à authentifier possède une clé secrète et une clé publique associée. L'entité authentifiante a uniquement besoin de cette clé publique pour réaliser l'authentification.

L'invention concerne plus précisément encore le domaine des procédés d'authentification dits à connaissance nulle ou sans apport de connaissance ("zero-knowledge" en anglais). Cela signifie que l'authentification se déroule suivant un protocole qui, de façon prouvée, et sous des hypothèses reconnues comme parfaitement raisonnables par la communauté scientifique, ne révèle rien sur la clé secrète de l'entité à authentifier.

L'invention trouve une application dans tous les systèmes où l'on veut authentifier des entités ou des messages, ou signer des messages, et plus particulièrement dans les systèmes où le nombre de bits transmis et/ou stockés constitue un paramètre critique. C'est notamment le cas des cartes à microcircuit standard ou à bas coût, non pourvues d'un coprocesseur arithmétique (appelé souvent cryptoprocesseur) pour accélérer les calculs cryptographiques.

Une application typique de l'invention est le porte-monnaie électronique, qui requiert un très haut niveau de sécurité, tout en excluant l'usage d'un cryptoprocesseur, soit pour des raisons de coût, soit pour des raisons techniques (par exemple utilisation d'une interface sans contact), soit pour les deux.

Une autre application possible est la télécarte de future génération, pour laquelle les contraintes de coût sont encore plus sévères que pour le porte-monnaie électronique.

## Etat de la technique antérieure

De nombreux protocoles d'identification sans apport de connaissance sont connus. On peut citer entre autres les quatre protocoles suivants :

1) le protocole de FIAT-SHAMIR décrit dans : A. FIAT et A. SHAMIR, "How to prove yourself : Practical solutions to identification and signature problems", publié dans Advances in Cryptology ; Proceedings of CRYPTO'86, Lecture Notes in Computer Science, vol. 263, Springer-Verlag, Berlin, 1987, pp.

186-194 ;

2) le protocole de GUILLOU-QUISQUATER décrit dans : L.C. GUILLOU et J.J. QUISQUATER, "A practical zero-knowledge protocol fitted to security microprocessors minimizing both transmission and memory", publié dans Advances in Cryptology : Proceedings of EUROCRYPT'88, Lecture Notes in Computer Science, vol. 330, Springer-Verlag, Berlin, 1988, pp. 123-128 ;

3) le protocole de SCHNORR décrit dans : C.P. SCHNORR, "Efficient identification and signatures for smart cards", publié dans Advances in Cryptology : Proceedings of CRYPTO'89, Lecture Notes in Computer Science, vol. 435, Springer-Verlag, Berlin, 1987, pp. 239-252 ;

4) le protocole de GIRAULT décrit dans la demande de brevet français FR-A-2 716 058.

De façon générale, la plupart des protocoles d'authentification sans apport de connaissance se déroulent en 4 étapes. On supposera, pour simplifier, que l'entité authentifiante, notée B, connaît déjà tous les paramètres publics caractéristiques de l'entité à authentifier, notée A, à savoir son identité, sa clé publique, etc... Les quatre étapes sont alors les suivantes .

**Etape 1 :**
A fournit à B au moins un engagement c, constitué soit par un paramètre x choisi au hasard par A, soit par une fonction pseudo-aléatoire h du paramètre x et, s'il y a lieu, du message à authentifier ou à signer : $c=h(x,[M])$, (la notation $[M]$ exprime que M est optionnel).

**Etape 2 :**
B choisit au hasard un paramètre e appelé "question" et transmet e à A.

**Etape 3 :**
A fournit à B une réponse y, cohérente avec la question e, l'engagement c et la clé publique v de A.

**Etape 4 :**
B calcule x à partir des éléments y, e et v soit $x=\varphi(y,e,v)$ puis vérifie que : $c=h(\varphi(v,e,y),[M])$.

Dans certains protocoles, il y a un ou deux échanges supplémentaires entre A et B. Dans le cas d'une signature de message, les deux premiers échanges sont supprimés, et le paramètre e est choisi égal à c : A calcule successivement, et seul, c,e(c'est-à-dire c) et y.

Le nombre u de questions pouvant être choisies par B est directement relié au niveau de sécurité du protocole, lequel dépend de la probabilité de succès d'un imposteur (c'est-à-dire d'une entité C qui tente frauduleusement de se faire passer pour A). Ce niveau de sécurité, noté p, est caractérisé par un paramètre k, selon la relation $p=1-2^{-k}$. En d'autres termes, l'imposteur n'a qu'une chance sur $2^k$ de réussir son imposture. On peut montrer que, si le protocole repose sur un problème mathématique difficile, et si les engagements sont de longueur suffisante, alors il suffit que la longueur de u soit égale à k bits. En d'autres termes, la question doit être choisie dans l'ensemble {0, ..., $2^k$-1} (bornes incluses).

Dans l'état de la technique, k est égal à 32 bits, ce qui donne seulement une chance sur quatre milliards de réussir une imposture. Dans les applications où l'échec d'une identification peut avoir des conséquences très néfastes (poursuite judiciaire par exemple), cette longueur peut être réduite à quelques bits.

Dans leur version de base, aucun des protocoles mentionnés ne peut être mis en oeuvre dans une application à fortes contraintes, comme celles qui ont été évoquées plus haut, car les calculs requis ne peuvent être effectués par une carte à microcircuit non dotée d'un cryptoprocesseur.

Une première optimisation, due à FIAT et SHAMIR, concerne le nombre de bits échangés entre les deux entités. Elle consiste à utiliser une fonction de hachage lors du calcul de l'engagement. A elle seule, cette optimisation ne permet pas de diminuer le nombre de calculs effectués par l'entité authentifiée, car l'engagement continue d'être calculé par elle.

Pour diminuer ce nombre, il faut faire appel à un mode d'utilisation particulier, que l'on appelle mode à précalculs, consistant à calculer à l'avance des paramètres que l'on appellera pré-engagements et qui entrent dans le calcul des engagements. On peut aussi faire calculer des engagements par un serveur disposant d'une puissance de calcul supérieure, puis les stocker dans la carte à microcircuit de l'entité à authentifier. Au moment précis de la transaction électronique, la carte à microcircuit n'a plus alors à effectuer que des calculs rudimentaires. Ce mode d'utilisation est divulgué dans la demande FR-A-2 716 058 citée. Chaque pré-engagement est utilisé pour une et une seule transaction. Lorsque tous les pré-engagements ont été consommés par la carte, il est nécessaire d'en recalculer de nouveaux et de les stocker dans la carte (opération de rechargement).

La mémoire de données d'une carte à microcircuit à bas coût ne dépassant que rarement 8 Koctets, il est difficilement concevable de consacrer plus de 1 Koctet au seul stockage des pré-engagements. Il est donc nécessaire de réduire autant que possible la taille de ces derniers, pour réaliser un maximum de transactions entre deux rechargements.

Dans tous ces procédés d'authentification, on peut définir une capacité de calcul qui est le nombre maximum de calculs que les moyens mis en oeuvre peuvent effectuer en un temps raisonnable. Comme ces calculs sont binaires, on peut exprimer cette capacité sous forme d'une puissance de 2, par exemple sous la forme $2^N$ où N est un entier. Ce nombre n'est pas déterminé avec une extrême précision, mais est défini à quelques unités près. Par exemple, de nos jours, l'entier N est de l'ordre d'environ 80, c'est-à-dire qu'avec les moyens dont on dispose, la capacité est de $2^{80}$, c'est-à-dire qu'on peut effectuer au maximum environ $2^{80}$ opérations dans un temps raisonnable.

Dans la version de base du procédé décrit dans la demande FR-A-2 716 058 citée, la taille des pré-engagements ou des engagements eux-mêmes est d'environ 2N bits, où le nombre N est pris égal à environ 80. La taille d'un pré-engagement est donc de l'ordre de 160 bits (elle est de 128 bits dans le document cité, où N est pris égal à 64). On peut donc stocker 50 engagements dans une mémoire de 1 Koctet, ce qui est relativement peu.

Dans une autre demande FR-A-2 752 122, il est décrit un procédé d'authentification permettant de réduire le nombre de bits à transmettre ou à stocker. La taille des pré-engagements ou des engagements peut être réduite à un peu plus de N bits (soit environ 88 avec N=80), ce qui permet de stocker plus de 90 pré-engagements dans une mémoire de 1 Koctet et de réduire jusqu'à 18% des bits transmis lors de l'exécution du protocole.

Malheureusement, ce gain reste insuffisant pour de nombreuses applications, en particulier pour le porte-monnaie électronique. Beaucoup de transactions peuvent ne concerner que de très petit montants (transports en commun, parcmètres, télécommunications locales, etc...), et l'utilisateur doit pouvoir effectuer des transactions jusqu'à épuisement du solde, sans être limité par aucune autre considération. Dans ce contexte, un minimum de 150 à 200 transactions sans rechargement semble devoir être exigé, ce que les procédés connus ne permettent pas.

C'est justement le but de la présente invention de réduire encore la taille des pré-engagements et, optionnellement, des engagements eux-mêmes. Selon l'invention, on peut descendre à environ 48 bits, ce qui permet de stocker 170 pré-engagements dans une mémoire de 1 Koctet. Dans certaines applications, cette taille peut être encore inférieure et par exemple tomber à 32 bits, ce qui permet de stocker 256 pré-engagements.

L'invention rend ainsi possible l'exécution rapide d'un algorithme d'identification ou d'authentification de message ou de signature de message, dans une carte à microcircuit standard à bas coût, pour des applications telles que le porte-monnaie électronique ou la télécarte de future génération.

**Exposé de l'invention**

L'invention repose sur l'observation suivante : la capacité de calcul est très fortement diminuée (typiquement $2^{16}$ au lieu de $2^{80}$) si on contraint le fraudeur à effectuer les calculs dans un laps de temps petit et avec des moyens de calcul réduits.

Partant de cette observation, l'invention propose de mesurer le temps $\Delta t$ mis par l'entité à authentifier pour répondre à l'entité authentifiante et de limiter ce temps à une valeur maximum $\Delta t_{max}$.

Dans le laps de temps $\Delta t_{max}$, les moyens mis en oeuvre ont une capacité de calcul égalé à $2^P$ (selon les considérations développées plus haut). Ce nombre $2^P$ est naturellement inférieur au nombre $2^N$ en raison de la contrainte qui pèse sur le temps accordé pour effectuer ces calculs. L'invention propose alors de prendre comme taille des pré-engagements ou des engagements le nombre k+P ou un nombre supérieur mais restant inférieur à k+N. Typiquement, le nombre P peut être de l'ordre de 16, de sorte que si k=32, la taille du pré-engagement ou de l'engagement sera de 32+16 soit 48 bits ou un peu plus (à comparer avec les 128 ou 88 bits dans les deux demandes de brevet déjà citées).

Deux options s'offrent alors :

- une première option dans laquelle on allonge la question e (qui, dans l'art antérieur, possède une taille de k bits), ce qui, typiquement, donne une taille d'environ 64 bits ;

- une seconde option dans laquelle on ajoute au protocole un échange préliminaire au cours duquel B envoie un nombre aléatoire w à A, (typiquement 32 bits), lequel nombre w constitue un paramètre supplémentaire pris en compte pour le calcul de l'engagement c : $c=h(\alpha,w,[M])$; l'intervalle de temps $\Delta t$ à mesurer est alors celui qui s'écoule entre l'envoi de l'échange préliminaire et la réception des paramètres e et y. La question posée e peut garder alors la taille de k bits.

Pour une signature de message, cette seconde option doit être obligatoirement retenue. L'intérêt de cette seconde option est que la taille de la question e reste réduite. Or, dans certains protocoles (notamment ceux de FIAT-SHAMIR et de GUILLOU-QUISQUATER), le temps de calcul de la réponse y dépend beaucoup de la longueur de e, alors que le temps de calcul de l'engagement c dépend très peu de la longueur de w. Pour ces protocoles, la seconde option permet donc de diminuer la taille des engagements sans augmenter notablement le temps d'exécution du protocole. Par ailleurs, cette seconde option est la seule possible dans le cas de la signature de message, puisqu'il n'y a plus de question à proprement parler.

Le niveau de sécurité du protocole selon l'invention (c'est-à-dire la probabilité minimale de détection d'un imposteur) est équivalent à celui des protocoles connus $(1-2^{-k})$, alors que la longueur des pré-engagements ou des engagements est divisée par presque quatre. On peut démontrer cette équivalence des niveaux de sécurité de la manière suivante. Soit C un fraudeur, qui chercherait à se faire passer pour A (ou à faire croire que le message M provient de A). C ne connaît évidemment pas la clé secrète de A. Il peut mettre en oeuvre essentiellement trois stratégies, que l'on peut désigner par "fraude par devinette", "fraude en temps réel" (effectuée pendant la transaction) et "fraude en temps différé" (effectuée avant la transaction), stratégies qui peuvent d'ailleurs être combinées :

a) fraude par devinette :

- première option : C devine la valeur de la question e en la choisissant au hasard, choisit la réponse y au hasard et calcule $c=h(\varphi(v,e,y),[M])$. Puis il commence la transaction avec cette valeur de c. Il ne réussira que s'il a bien deviné e, donc avec une probabilité de $2^{-64}$.

- seconde option : C devine la valeur de la question e en la choisissant au hasard, choisit la réponse y au hasard et calcule $c=h(\varphi(v,e,y),w,[M])$. Il ne peut le faire qu'une fois connu w, donc pendant la transaction. Puis il continue la transaction avec cette valeur de c. Il ne réussira que s'il a bien deviné e, donc avec une probabilité de $2^{-64}$.

b) fraude en temps réel :
Après avoir envoyé une valeur (au hasard) de c, et reçu une valeur de e, C recherche par essais exhaustifs une valeur de y qui satisfasse l'équation de vérification $c=h(\varphi(v,e,y),[M])$. Puisqu'il peut effectuer un maximum de $2^P$ essais, et que le nombre de valeurs possibles de c est $2^{k+P}$, sa probabilité de réussite est $1/2^k$, comme souhaité.

c) fraude en temps différé :

- première option : C calcule un grand nombre de valeurs de c à partir de diverses valeurs de y et e. Puisqu'il peut en calculer un maximum de $2^N$, il y aura pour chaque valeur possible de c environ $2^{N-P-k}$ valeurs correspondantes de y et de e. C choisit une quelconque de ces valeurs, stocke les valeurs de y et e correspondantes et entame le protocole. Puisqu'il y a $2^{N-P}$ valeurs possibles de e, la probabilité que C ait stocké la valeur qui lui est envoyée par B est de nouveau inférieure à $1/2^k$, comme souhaité.

- seconde option : le calcul est essentiellement le même que pour la première option, puisque la taille totale des deux nombres aléatoires w et e est égale à la taille de e dans la seconde option.

De façon précise, la présente invention a donc pour objet un procédé d'authentification mettant en oeuvre une première entité dite à "authentifier" (A) et une seconde entité dite "authentifiante" (B), ce procédé comprenant les opérations suivantes :

- l'entité à authentifier (A) envoie au moins un engagement c à l'entité authentifiante (B), cet engagement ayant une certaine taille comptée en nombre de bits,

- l'entité authentifiante (B) reçoit cet engagement c, choisit au hasard un nombre e appelé "question" et envoie cette question e à l'entité à authentifier (A),

- l'entité à authentifier (A) reçoit la question e, effectue des calculs utilisant cette question e, le résultat de ces calculs constituant une réponse y et envoie cette réponse y à l'entité authentifiante (B),

- l'entité authentifiante (B) reçoit la réponse y, effectue un calcul utilisant cette réponse y et vérifie que ce calcul redonne l'engagement reçu c,

un niveau de sécurité égal à $1-2^{-k}$ étant obtenu pour cette authentification où k est un entier que l'on se fixe selon le niveau de sécurité désiré, ce procédé étant caractérisé en ce que l'entité authentifiante (B) mesure l'intervalle de temps ($\Delta t$) s'écoulant entre l'instant où elle s'adresse à l'entité à authentifier (A) et l'instant où elle reçoit la réponse de l'entité à authentifier (A), et elle vérifie que l'intervalle de temps mesuré ($\Delta t$) est inférieur à un intervalle de temps déterminé $\Delta t_{max}$, et en ce que, l'entité à authentifier (A) ayant une capacité de calcul d'environ $2^P$ dans ledit intervalle de temps déterminé ($\Delta t_{max}$), l'engagement c utilisé par l'entité à authentifier (A) possède une taille égale au moins à (k+P) bits.

Dans cette définition, il faut comprendre que la taille peut être soit égale à (k+P) bits, soit être supérieure de quelques unités à ce nombre.

Dans un mode de mise en oeuvre particulier, l'entité à authentifier (A) calcule l'engagement à partir d'un pré-engagement calculé à l'avance, lequel possède une taille égale à au moins (k+P) bits. Mais l'entité à authentifier peut également calculer l'engagement par tirage au hasard d'un nombre et calculs à partir de ce nombre.

Dans une autre variante de mise en oeuvre, l'entité authentifiante (B), dans une opération préliminaire, choisit au hasard un nombre w et envoie ce nombre w à l'entité à authentifier (A) laquelle utilise ce nombre w pour constituer l'engagement, la question e posée par l'entité authentifiante (B) possédant un nombre de bits égal à k, l'intervalle de temps mesuré étant l'intervalle compris entre l'instant où l'entité authentifiante (B) envoie le nombre w à l'entité à authentifier (A) et l'instant où l'entité authentifiante (B) reçoit la réponse y de l'entité à authentifier (A).

La présente invention a également pour objet un procédé de signature de message dans lequel on met en oeuvre une première entité dite "signataire" (A) et une seconde entité dite "authentifiante" (B), ce procédé comprenant les opérations suivantes :

- l'entité signataire (A) calcule un nombre e fonction du message à signer et calcule un nombre y appelé réponse, et envoie cette réponse à l'entité authentifiante (B),
- l'entité authentifiante (B) reçoit la réponse y, effectue un calcul utilisant cette réponse y et vérifie que ce calcul redonne le nombre e,

un niveau de sécurité égal à $1-2^{-k}$ étant obtenu pour cette signature où k est un entier que l'on se fixe selon le niveau de sécurité désiré, ce procédé étant caractérisé en ce que :

- l'entité signataire (A) calcule un nombre e dont la taille est égale à au moins (k+P) bits où $2^P$ représente la capacité de calcul de l'entité à authentifier (A) dans un intervalle de temps fixé ($\Delta t_{max}$),
- dans une opération préliminaire, l'entité authentifiante (B) choisit au hasard un nombre w et envoie ce nombre w à l'entité signataire (A) laquelle utilise ce nombre w pour constituer le nombre e,
- l'entité authentifiante (B) mesure l'intervalle de temps $\Delta t$ qui s'écoule entre l'instant où elle envoie le nombre w à l'entité signataire (A) et l'instant où elle reçoit la réponse y de l'entité signataire (A), et elle vérifie que l'intervalle mesuré $\Delta t$ est inférieur à l'intervalle de temps fixé $\Delta t_{max}$.

Là encore, l'entité signataire peut calculer le nombre e à partir d'un pré-engagement calculé à l'avance, lequel possède une taille égale à au moins (k+P) bits, à quelques unités près.

La présente invention a également pour objet un système comprenant une première entité dite à "authentifier" (A) et une seconde entité dite "authentifiante" (B), dans lequel :

- l'entité à authentifier (A) comprend des moyens pour envoyer au moins un engagement c à l'entité authentifiante (B), cet engagement ayant une certaine taille comptée en nombre de bits,
- l'entité authentifiante (B) comprend des moyens pour recevoir cet engagement c, pour choisir au hasard un nombre e appelé "question" et pour envoyer cette question e à l'entité à authentifier (A),
- l'entité à authentifier (A) comprend des moyens pour recevoir la question e, pour effectuer des calculs utilisant cette question e, le résultat de ces calculs constituant une réponse y et pour envoyer cette réponse y à l'entité authentifiante (B),
- l'entité authentifiante (B) comprend des moyens pour recevoir la réponse y, pour effectuer un calcul utilisant cette réponse y et pour vérifier si ce calcul redonne l'engagement reçu c,

un niveau de sécurité égal à $1-2^{-k}$ étant obtenu pour cette authentification où k est un entier que l'on se fixe selon le niveau de sécurité désiré, ce système étant caractérisé en ce que l'entité authentifiante (B) comprend des moyens pour mesurer l'intervalle de temps ($\Delta t$) s'écoulant entre l'instant où elle s'adresse à l'entité à authentifier (A) et l'instant où elle reçoit la réponse de l'entité à authentifier (A), et des moyens pour vérifier que l'intervalle de temps mesuré ($\Delta t$) est inférieur à un intervalle de temps déterminé $\Delta t_{max}$, et en ce que, l'entité à authentifier (A) ayant une capacité de calcul d'environ $2^P$ dans ledit intervalle de temps déterminé ($\Delta t_{max}$), l'engagement c utilisé par l'entité à authentifier (A) possède une taille égale à au moins (k+P) bits.

Selon un mode de réalisation, l'entité à authentifier (A) comprend des moyens pour calculer l'engagement à partir d'un pré-engagement calculé à l'avance, lequel possède une taille égale au moins à (k+P) bits.

Le nombre P peut être pris égal à 16 et le nombre k à 32, le pré-engagement ou l'engagement ayant ainsi une taille égale au moins à 48 bits.

La question e posée par l'entité authentifiante (B) peut posséder un nombre de bits supérieur à k.

L'entité authentifiante (B) peut comprendre des moyens pour, dans une opération préliminaire, choisir au hasard un nombre w et pour envoyer ce nombre w à l'entité à authentifier (A) laquelle utilise ce nombre w pour constituer l'engagement c, la question e posée par l'entité authentifiante (B) possédant un nombre de bits égal à k, les moyens pour mesurer l'intervalle de temps ($\Delta$t) étant aptes à mesurer cet intervalle entre l'instant où l'entité authentifiante (B) envoie le nombre w à l'entité à authentifier et l'instant où l'entité authentifiante (B) reçoit la réponse y de l'entité à authentifier (A).

L'invention a également pour objet un système comprenant une première entité dite "signataire" (A) et une seconde entité dite "authentifiante" (B), dans lequel :

- l'entité signataire (A) comprend des moyens pour calculer un nombre e fonction du message à signer et pour calculer un nombre y appelé réponse, fonction du nombre e et pour envoyer cette réponse à l'entité authentifiante (B),
- l'entité authentifiante (B) comprend des moyens pour recevoir la réponse y, pour effectuer un calcul utilisant cette réponse y et pour vérifier que ce calcul redonne le nombre e,

un niveau de sécurité égal à $1-2^{-k}$ étant obtenu pour cette signature où k est un entier que l'on se fixe selon le niveau de sécurité désiré,
ce système étant caractérisé en ce que :

- l'entité signataire (A) comprend des moyens pour calculer un nombre e dont la taille est égale au moins à (k+P) bits où $2^P$ représente la capacité de calcul de l'entité à authentifier (A) dans un intervalle de temps fixé ($\Delta t_{max}$),
- l'entité authentifiante (B) comprend des moyens pour, dans une opération préliminaire, choisir au hasard un nombre w et pour envoyer ce nombre w à l'entité signataire (A) laquelle utilise ce nombre w dans ses moyens pour constituer le nombre e,
- l'entité authentifiante (B) comprend des moyens pour mesurer l'intervalle de temps At qui s'écoule entre l'instant où elle envoie le nombre w à l'entité signataire (A) et l'instant où elle reçoit la réponse y de l'entité signataire (A), et des moyens pour vérifier que l'intervalle mesuré At est inférieur à l'intervalle de temps fixé $\Delta t_{max}$.

L'entité signataire (A) peut comprendre des moyens pour calculer le nombre e à partir d'un pré-engagement calculé à l'avance, lequel possède une taille égale au moins à (k+P) bits.

Le nombre P peut être pris égal à 16 et le nombre k à 32, le pré-engagement ou le nombre e ayant ainsi une taille égale au moins à 48 bits.

## Description détaillée de mondes particuliers de réalisation

Dans la description qui suit, on supposera que l'invention s'applique dans le cadre de la technique divulguée dans la demande de brevet FR-A-2 716 058 déjà citée, technique dans laquelle les multiplications modulaires sont supprimées, notamment dans l'opération de l'étape 3. Ce type d'opérations n'a donc pas besoin d'être prévu dans la carte à microcircuit quand le mode à précalculs est utilisé. Naturellement, cet exemple ne limite pas la portée de l'invention qui peut être utilisée avec des protocoles à multiplications modulaires.

Les protocoles conformes à la demande citée sont basés sur la difficulté de calculer les logarithmes discrets. Les paramètres universels (c'est-à-dire partagés par tous les utilisateurs) sont :

- un grand nombre composé n,
- un entier $\alpha$ (la "base"),
- quatre paramètres t, k, u, z, où k est le paramètre de sécurité.

La longueur recommandée pour n est (au moins) de 512 bits, et de préférence 768 bits ou plus. Une valeur typique du paramètre de sécurité k est 32. Le paramètre u désigne le nombre de questions possibles (on a donc $u=2^k$). Une valeur typique de la longueur de t est 160 bits. Une valeur typique de la longueur de z est 64 bits.

La clé secrète d'un utilisateur est un entier s inférieur à t. Sa clé publique est : $v=\alpha^{-s}$ (mod n).

Le protocole d'authentification de base, divulgué dans cette demande antérieure, est le suivant :

1. A choisit au hasard un entier r dans {0...tuz-1}, calcule $x=\alpha^r$(mod n) et envoie c à B.
2. B choisit au hasard un élément e dans {0 ... $2^k$-1} et envoie e à A.
3. A calcule y=r+se et envoie y à B.
4. B vérifie que $x=\alpha^y v^e$(mod n).

On remarque qu'un imposteur (qui par hypothèse ignore s) peut tromper un vérificateur avec une probabilité égale à $2^{-k}$, en choisissant un entier y, un élément e et en calculant x comme dans l'étape 4. Comme on peut prouver que, si le problème du logarithme discret est difficile, il ne peut substantiellement améliorer cette probabilité, le niveau de sécurité est donc égal à $1-2^{-k}$.

Afin de diminuer le nombre de bits transmis, on peut, comme l'on suggéré FIAT et SHAMIR, prendre comme engagement c=h(x) où h est une fonction pseudo-aléatoire. L'équation de vérification de l'étape 4 devient alors :

$$c=h(\alpha^y v^e(\bmod\ n)).$$

Si l'on veut, de surcroît, authentifier un message M, alors on introduit M dans le calcul de l'engagement : c=h(x,M).

Afin de conserver un niveau de sécurité égal à $1-2^{-k}$, il est nécessaire, toutes choses égales par ailleurs, que la longueur de c soit au moins 160 bits.

Ce rappel étant effectué, on peut décrire le protocole correspondant selon la présente invention dans une variante utilisant la première option. On prendra N=80 et P=16 et en supposant que les longueurs du pré-engagement et de l'engagement sont toutes deux réduites à leur minimum, c'est-à-dire à 48 bits, cette réduction étant compensée par une augmentation de la longueur de e, qui passe à 64 bits. De plus, à l'étape 4, un contrôle du temps mis par A est effectué par B. De la sorte, le niveau de sécurité du protocole modifié reste égal à $1-2^{-k}$. Les étapes du procédé selon l'invention deviennent alors :

1. A choisit au hasard un entier r dans {0 ...tuz-1}, calcule x=$\alpha^r$(mod n), puis éventuellement c'=f(x) qui appartient à {0 ...$2^{48}$-1}, puis c=h(x,w,[M]), ou c=h(x',w,[M], qui appartient à {0 ... $2^{48}$-1} et envoie c à B.
2. B choisit au hasard un élément e dans {0 ... $2^{64}$-1} et envoie e à A.
3. A calcule y=r+se et envoie y à B.
4. B vérifie que c=h($\alpha^y v^e$(mod n), [M]) ou c=h(f($\alpha^y v^e$(mod n), [M]) et que l'intervalle de temps entre l'émission de l'étape 2 et la réception de l'étape 3 est inférieur à une ou deux secondes.

L'invention est particulièrement bien adaptée à un tel protocole de base, car elle n'entraîne aucun changement des paramètres universels principaux, à savoir n et a, ni même des paramètres individuels (clés secrète et publique de l'utilisateur). En revanche, elle implique un allongement de e, car u est maintenant égal à $2^{64}$ (mais ceci ne serait plus vrai si l'on adoptait la seconde option).

Par ailleurs et surtout, l'invention est particulièrement utile dans le mode à précalculs, puisque les pré-engagements ont une taille réduite à 48 bits. Certes, il faut au préalable stocker non seulement les pré-engagements mais aussi les valeurs de r correspondantes. Cependant, il est possible d'éviter cela en générant ces nombres à l'aide d'un générateur pseudo-aléatoire contenu dans le dispositif de sécurité de A, comme il est décrit dans la demande FR-A-2 716 058 déjà citée.

Si l'on opte pour la seconde option, le procédé comprend une étape supplémentaire et préalable notée 0 et devient :

0. B choisit au hasard un nombre aléatoire w dans {0 ... $2^{32}$-1} et l'envoie à A.
1. A choisit au hasard un entier r dans {0 ... tuz-1}, calcule x=$\alpha^r$(mod n) puis éventuellement x'=f{x) qui appartient à {0 ... $2^{48}$-1}, puis c=h(x,w,[M]), ou c=h(x',w,[M] qui appartient à {0 ... $2^{48}$-1}, et envoie c à B.
2. B choisit au hasard un élément e dans {0 ... $2^{32}$-1} et envoie e à A.
3. A calcule y=r+se et envoie y à B.
4. B vérifie que c=h ($\alpha^y v^e$(mod n), w, [M]) ou c=h(f($\alpha^y v^e$(mod n )), w, [M])) et que l'intervalle de temps entre l'émission de l'étape 0 et la réception de l'étape 3 est inférieur à une ou quelques secondes.

Enfin, le protocole de signature sera :

0. B choisit au hasard un nombre aléatoire w dans {0 ... $2^{64}$-1} et l'envoie à A.
1. A choisit au hasard un entier r dans {0 ...tuz-1} et calcule x=$\alpha^r$(mod n) puis éventuellement x'=f(x), qui appartient à {0 ... $2^{48}$-1}.
2. A calcule e=h (x, w, [M]) qui appartient à {0 ...$2^{48}$-1}.
3. A calcule y=r+se et envoie (e,y) à B.
4. B vérifie que e=h($\alpha^y v^e$(mod n), w, [M]) et que l'intervalle de temps entre l'émission de l'étape 0 et la réception de l'étape 3 est inférieur à une ou quelques secondes.

**Revendications**

1. Procédé d'authentification mettant en oeuvre une première entité dite à "authentifier" (A) et une seconde entité dite "authentifiante" (B), ce procédé comprenant les opérations suivantes :

- l'entité à authentifier (A) envoie au moins un engagement c à l'entité authentifiante (B), cet engagement ayant une certaine taille comptée en nombre de bits,
- l'entité authentifiante (B) reçoit cet engagement c, choisit au hasard un nombre e appelé "question" et envoie cette question e à l'entité à authentifier (A),
- l'entité à authentifier (A) reçoit la question e, effectue des calculs utilisant cette question e, le résultat de ces calculs constituant une réponse y et envoie cette réponse y à l'entité authentifiante (B),
- l'entité authentifiante (B) reçoit la réponse y, effectue un calcul utilisant cette réponse y et vérifie que ce calcul redonne l'engagement reçu c,

un niveau de sécurité égal à $1-2^{-k}$ étant obtenu pour cette authentification où k est un entier que l'on se fixe selon le niveau de sécurité désiré, ce procédé étant **caractérisé en ce que** l'entité authentifiante (B) mesure l'intervalle de temps ($\Delta$t) s'écoulant entre l'instant où elle s'adresse à l'entité à authentifier (A) et l'instant où elle reçoit la réponse de l'entité à authentifier (A), et elle vérifie que l'intervalle de temps mesuré ($\Delta$t) est inférieur à un intervalle de temps déterminé $\Delta t_{max}$, et **en ce que**, l'entité à authentifier (A) ayant une capacité de calcul d'environ $2^P$ dans ledit intervalle de temps déterminé ($\Delta t_{max}$), l'engagement c utilisé par l'entité à authentifier (A) possède une taille égale à au moins (k+P) bits.

2. Procédé selon la revendication 1, dans lequel l'entité à authentifier (A) calcule l'engagement à partir d'un pré-engagement calculé à l'avance, lequel possède une taille égale au moins à (k+P) bits.

3. Procédé d'authentification selon l'une quelconque des revendications 1 et 2, dans lequel le nombre P est pris égal à 16 et le nombre k à 32, le pré-engagement ou l'engagement ayant ainsi une taille égale au moins à 48 bits.

4. Procédé d'authentification selon la revendication 1, dans lequel la question e posée par l'entité authentifiante (B) possède un nombre de bits supérieur à k.

5. Procédé selon la revendication 4, dans lequel le nombre k étant égal à 32 la question posée e par l'entité authentifiante (B) possède un nombre de bits égal à environ 64.

6. Procédé d'authentification selon la revendication 1, dans lequel l'entité authentifiante (B), dans une opération préliminaire, choisit au hasard un nombre w et envoie ce nombre w à l'entité à authentifier (A) laquelle utilise ce nombre w pour constituer l'engagement c, la question e posée par l'entité authentifiante (B) possédant un nombre de bits égal à k, l'intervalle de temps ($\Delta$t) étant mesuré entre l'instant où l'entité authentifiante (B) envoie le nombre w à l'entité à authentifier et l'instant où l'entité authentifiante (B) reçoit la réponse y de l'entité à authentifier (A).

7. Procédé d'authentification selon la revendication 6, dans lequel le nombre w préalablement fourni par l'entité authentifiante (B) à l'entité à authentifier (A) possède environ 32 bits, l'engagement ayant une taille égale au moins à 48 bits, la question e posée par l'entité authentifiante (B) ayant un nombre de bits égal à environ 32.

8. Procédé d'authentification selon l'une quelconque des revendications 1 à 7, dans lequel l'entité à authentifier (A) introduit un message (M) dans l'engagement qu'elle constitue, l'authentification portant alors aussi sur le message (M).

9. Procédé de signature de message dans lequel on met en oeuvre une première entité dite "signataire" (A) et une seconde entité dite "authentifiante" (B), ce procédé comprenant les opérations suivantes :

    - l'entité signataire (A) calcule un nombre e fonction du message à signer et calcule un nombre y appelé réponse, fonction du nombre e et envoie cette réponse à l'entité authentifiante (B),
    - l'entité authentifiante (B) reçoit la réponse y, effectue un calcul utilisant cette réponse y et vérifie que ce calcul redonne le nombre e,

un niveau de sécurité égal à $1-2^{-k}$ étant obtenu pour cette signature où k est un entier que l'on se fixe selon le niveau de sécurité désiré,
ce procédé étant **caractérisé en ce que** :

    - l'entité signataire (A) calcule un nombre e dont la taille est égale au moins à (k+P) bits où $2^P$ représente la capacité de calcul de l'entité à authentifier (A) dans un intervalle de temps fixé ($\Delta t_{max}$),
    - dans une opération préliminaire, l'entité authentifiante (B) choisit au hasard un nombre w et envoie ce nombre w à l'entité signataire (A) laquelle utilise ce nombre w pour constituer le nombre e,
    - l'entité authentifiante (B) mesure l'intervalle de temps $\Delta$t qui s'écoule entre l'instant où elle envoie le nombre w à l'entité signataire (A) et l'instant où elle reçoit la réponse y de l'entité signataire (A), et elle vérifie que l'intervalle mesuré $\Delta$t est inférieur à l'intervalle de temps fixé $\Delta t_{max}$.

10. Procédé selon la revendication 9, dans lequel l'entité signataire (A) calcule le nombre e à partir d'un pré-engagement calculé à l'avance, lequel possède une taille égale au moins à (k+P) bits.

11. Procédé de signature de message selon les revendications 9 ou 10, dans lequel le nombre P est pris égal à 16 et le nombre k à 32, le pré-engagement ou le nombre e ayant ainsi une taille égale au moins à 48 bits.

12. Système comprenant une première entité dite à "authentifier" (A) et une seconde entité dite "authentifiante" (B), dans lequel :

    - l'entité à authentifier (A) comprend des moyens pour envoyer au moins un engagement c à l'entité authentifiante (B), cet engagement ayant une certaine taille comptée en nombre de bits,
    - l'entité authentifiante (B) comprend des moyens pour recevoir cet engagement c, pour choisir au hasard un nombre e appelé "question" et pour envoyer cette question e à l'entité à authentifier (A),

- l'entité à authentifier (A) comprend des moyens pour recevoir la question e, pour effectuer des calculs utilisant cette question e, le résultat de ces calculs constituant une réponse y et pour envoyer cette réponse y à l'entité authentifiante (B),

- l'entité authentifiante (B) comprend des moyens pour recevoir la réponse y, pour effectuer un calcul utilisant cette réponse y et pour vérifier si ce calcul redonne l'engagement reçu c,

un niveau de sécurité égal à $1-2^{-k}$ étant obtenu pour cette authentification où k est un entier que l'on se fixe selon le niveau de sécurité désiré, ce système étant **caractérisé en ce que** l'entité authentifiante (B) comprend des moyens pour mesurer l'intervalle de temps ($\Delta t$) s'écoulant entre l'instant où elle s'adresse à l'entité à authentifier (A) et l'instant où elle reçoit la réponse de l'entité à authentifier (A), et des moyens pour vérifier que l'intervalle de temps mesuré ($\Delta t$) est inférieur à un intervalle de temps déterminé $\Delta t_{max}$, et **en ce que**, l'entité à authentifier (A) ayant une capacité de calcul d'environ $2^P$ dans ledit intervalle de temps déterminé ($\Delta t_{max}$), l'engagement c utilisé par l'entité à authentifier (A) possède une taille égale à au moins (k+P) bits.

13. Système selon la revendication 12, dans lequel l'entité à authentifier (A) comprend des moyens pour calculer l'engagement à partir d'un pré-engagement calculé à l'avance, lequel possède une taille égale au moins à (k+P) bits.

14. Système selon l'une quelconque des revendications 12 et 13, dans lequel le nombre P est pris égal à 16 et le nombre k à 32, le pré-engagement ou l'engagement ayant ainsi une taille égale au moins à 48 bits.

15. Système selon la revendication 12, dans lequel la question e posée par l'entité authentifiante (B) possède un nombre de bits supérieur à k.

16. Système selon la revendication 15, dans lequel le nombre k étant égal à 32 la question posée e par l'entité authentifiante (B) possède un nombre de bits égal à environ 64.

17. Système selon la revendication 12, dans lequel l'entité authentifiante (B) comprend des moyens pour, dans une opération préliminaire, choisir au hasard un nombre w et pour envoyer ce nombre w à l'entité à authentifier (A) laquelle utilise ce nombre w pour constituer l'engagement c, la question e posée par l'entité authentifiante (B) possédant un nombre de bits égal à k, les moyens pour mesurer l'intervalle de temps ($\Delta t$) étant aptes à mesurer cet intervalle entre l'instant où l'entité authentifiante (B) envoie le nombre w à l'entité à authentifier et l'instant où l'entité authentifiante (B) reçoit la réponse y de l'entité à authentifier (A).

18. Système selon la revendication 17, dans lequel le nombre w préalablement fourni par l'entité authentifiante (B) à l'entité à authentifier (A) possède environ 32 bits, l'engagement ayant une taille égale au moins à 48 bits, la question e posée par l'entité authentifiante (B) ayant un nombre de bits égal à environ 32.

19. Système selon la revendication 12, dans lequel l'entité à authentifier (A) comprend des moyens aptes à introduire un message (M) dans l'engagement qu'elle constitue, l'authentification portant alors aussi sur le message (M).

20. Système comprenant une première entité dite "signataire" (A) et une seconde entité dite "authentifiante" (B), dans lequel :

    - l'entité signataire (A) comprend des moyens pour calculer un nombre e fonction du message à signer et pour calculer un nombre y appelé réponse, fonction du nombre e et pour envoyer cette réponse à l'entité authentifiante (B),

    - l'entité authentifiante (B) comprend des moyens pour recevoir la réponse y, pour effectuer un calcul utilisant cette réponse y et pour vérifier que ce calcul redonne le nombre e,

un niveau de sécurité égal à $1-2^{-k}$ étant obtenu pour cette signature où k est un entier que l'on se fixe selon le niveau de sécurité désiré, ce système étant **caractérisé en ce que** :

    - l'entité signataire (A) comprend des moyens pour calculer un nombre e dont la taille est égale au moins à (k+P) bits où $2^P$ représente la capacité de calcul de l'entité à authentifier (A) dans un intervalle de temps fixé ($\Delta t_{max}$),

    - l'entité authentifiante (B) comprend des moyens pour, dans une opération préliminaire, choisir au hasard un nombre w et pour envoyer ce nombre w à l'entité signataire (A) laquelle utilise ce nombre w dans ses moyens pour constituer le nombre e,

    - l'entité authentifiante (B) comprend des moyens pour mesurer l'intervalle de temps $\Delta t$ qui s'écoule entre l'instant où elle envoie le nombre w à l'entité signataire (A) et l'instant où elle reçoit la réponse y de l'entité signataire (A), et des moyens pour vérifier que l'intervalle mesuré $\Delta t$ est inférieur à l'intervalle de temps fixé $\Delta t_{max}$.

**21.** Système selon la revendication 20, dans lequel l'entité signataire (A) comprend des moyens pour calculer le nombre e à partir d'un pré-engagement calculé à l'avance, lequel possède une taille égale au moins à (k+P) bits.

**22.** Système selon les revendications 20 ou 21, dans lequel le nombre P est pris égal à 16 et le nombre k à 32, le pré-engagement ou le nombre e ayant ainsi une taille égale au moins à 48 bits.

**Claims**

**1.** Authentication method employing a first entity (A), called the entity to be authenticated, and a second entity (B) called the authenticating entity, this method comprising the following operations:

- the entity to be authenticated (A) sends at least one witness c to the authenticating entity (B), this witness having a certain length counted in number of bits;
- the authenticating entity (B) receives this witness c, chooses a random number e called the "question", and sends this question e to the entity to be authenticated (A);
- the entity to be authenticated (A) receives the question e, performs calculations using this question e, the result of these calculations constituting a response y and sends this response y to the authenticating entity (B);
- the authenticating entity (B) receives the response y, performs a calculation using this response y and verifies that this calculation returns the witness received c;

a security level equal to $1-2^{-k}$ being obtained for this authentication, where k is an integer that is fixed according to the desired security level, this method being **characterized in that** the authenticating entity (B) measures the time interval ($\Delta t$) elapsing between the moment it addresses the entity to be authenticated (A) and the moment it receives the response from the entity to be authenticated (A), and it verifies that the measured time interval ($\Delta t$) is less than a determined time interval $\Delta t_{max}$, and **in that**, given that the entity to be authenticated (A) has a calculation capacity of around $2^P$ in said determined time interval ($\Delta t_{max}$), the witness c used by the entity to be authenticated (A) has a length equal to at least (k+P) bits.

**2.** Method according to Claim 1, in which the entity to be authenticated (A) calculates the witness from a pre-witness calculated in advance which has a length equal to at least (k+P) bits.

**3.** Authentication method according to either of Claims 1 and 2, in which the number P is taken to be equal to 16 and the number k equal to 32, the pre-witness or the witness thus having a length equal to at least 48 bits.

**4.** Authentication method according to Claim 1, in which the question e asked by the authenticating entity (B) has a number of bits greater than k.

**5.** Method according to Claim 4, in which, as the number k is equal to 32, the question e asked by the authenticating entity (B) has a number of bits equal to about 64.

**6.** Authentication method according to Claim 1, in which the authenticating entity (B), in a preliminary operation, chooses a random number w and sends this number w to the entity to be authenticated (A), which uses this number w to produce the witness c, the question e asked by the authenticating entity (B) having a number of bits equal to k, the time interval ($\Delta t$) being measured between the moment the authenticating entity (B) sends the number w to the entity to be authenticated and the moment the authenticating entity (B) receives the response y from the entity to be authenticated (A).

**7.** Authentication method according to Claim 6, in which the number w previously provided by the authenticating entity (B) to the entity to be authenticated (A) has about 32 bits, the witness having a length equal to at least 48 bits, the question e asked by the authenticating entity (B) having a number of bits equal to about 32.

**8.** Authentication method according to one of Claims 1 to 7, in which the entity to be authenticated (A) introduces a message (M) into the witness that this entity produces, the authentication then also pertaining to the message (M).

**9.** Message signature method in which a first entity, called the signing entity (A), and a second entity, called the authenticating entity (B), are employed, this method comprising the following operations:

- the signing entity (A) calculates a number e depending on the message to be signed and calculates a number y called the response, depending on the number e, and sends this response to the authenticating entity (B);
- the authenticating entity (B) receives the response y, performs a calculation using this response y and verifies that the calculation returns the number e;

a security level equal to $1-2^{-k}$ being obtained for this signature, where k is an integer that is fixed according to the desired security level,
this method being **characterized in that**:

- the signing entity (A) calculates a number e, the length of which is equal to at least (k+P) bits, where $2^P$ represents the calculation capacity of the entity to be authenticated (A) in a fixed time interval $(\Delta t_{max})$ ;
- in a preliminary operation, the authenticating entity (B) chooses a random number w and sends this number w to the signing entity (A), which uses this number w to produce the number e; and
- the authenticating entity (B) measures the time interval $\Delta t$ elapsing between the moment it sends the number w to the signing entity (A) and the moment it receives the response y from the signing entity (A), and it verifies that the measured interval $\Delta t$ is less than the fixed time interval $\Delta t_{max}$.

10. Method according to Claim 9, in which the signing entity (A) calculates the number e from a pre-witness calculated in advance, which has a length equal to at least (k+P) bits.

11. Message signature method according to Claims 9 or 10, in which the number P is taken to be equal to 16 and the number k equal to 32, the pre-witness or the number e thus having a length equal to at least 48 bits.

12. System comprising a first entity (A), called the entity to be authenticated, and a second entity (B) called the authenticating entity, in which:

- the entity to be authenticated (A) comprises means for sending at least one witness c to the authenticating entity (B), this witness having a certain length counted in number of bits;
- the authenticating entity (B) comprises means for receiving this witness c, for choosing a random number e called the "question", and for sending this question e to the entity to be authenticated (A);
- the entity to be authenticated (A) comprises means for receiving the question e, for performing calculations using this question e, the result of these calculations constituting a response y, and for sending this response y to the authenticating entity (B);
- the authenticating entity (B) comprises means for receiving the response y, for performing a calculation using this response y and for verifying whether this calculation returns the witness received c;

a security level equal to $1-2^{-k}$ being obtained for this authentication, where k is an integer that is fixed according to the desired security level,
this system being **characterized in that** the authenticating entity (B) comprises means for measuring the time interval $(\Delta t)$ elapsing between the moment it addresses the entity to be authenticated (A) and the moment it receives the response from the entity to be authenticated (A), and means for verifying that the measured time interval $(\Delta t)$ is less than a determined time interval $\Delta t_{max}$, and **in that**, given that the entity to be authenticated (A) has a calculation capacity of around $2^P$ in said determined time interval $(\Delta t_{max})$, the witness c used by the entity to be authenticated (A) has a length equal to at least (k+P) bits.

13. System according to Claim 12, in which the entity to be authenticated (A) comprises means for calculating the witness from a pre-witness calculated in advance which has a length equal to at least (k+P) bits.

14. System according to any one of Claims 12 and 13, in which the number P is taken to be equal to 16 and the number k equal to 32, the pre-witness or the witness thus having a length equal to at least 48 bits.

15. System according to Claim 12, in which the question e asked by the authenticating entity (B) has a number of bits greater than k.

16. System according to Claim 15, in which, as the number k is equal to 32, the question e asked by the authenticating entity (B) has a number of bits equal to about 64.

17. System according to Claim 12, in which the authenticating entity (B) comprises means for choosing, in a preliminary operation, a random number w and for sending this number w to the entity to be authenticated (A), which uses this number w to produce the witness c, the question e asked by the authenticating entity (B) having a number of bits equal to k, the means for measuring the time interval $(\Delta t)$ being able to measure this interval between the moment the authenticating entity (B) sends the number w to the entity to be authenticated and the moment the authenticating entity (B) receives the response y from the entity to be authenticated (A).

18. System according to Claim 17, in which the number w previously provided by the authenticating entity (B) to the entity to be authenticated (A) has about 32 bits, the witness having a length equal to at least 48 bits, the question e asked by the authenticating entity (B) having a number of bits equal to about 32.

19. System according to Claim 12, in which the entity to

21      **EP 1 166 496 B1**      22

be authenticated (A) comprises means able to introduce a message (M) into the witness that this entity produces, the authentication then also pertaining to the message (M).

20. System comprising a first entity, called the signing entity (A), and a second entity, called the authenticating entity (B), in which:

> - the signing entity (A) comprises means for calculating a number e depending on the message to be signed and for calculating a number y called the response, depending on the number e, and for sending this response to the authenticating entity (B);
> - the authenticating entity (B) comprises means for receiving the response y, for performing a calculation using this response y and for verifying that the calculation returns the number e;

a security level equal to $1-2^{-k}$ being obtained for this signature, where k is an integer that is fixed according to the desired security level,
this system being **characterized in that**:

> - the signing entity (A) comprises means for calculating a number e, the length of which is equal to at least (k+P) bits, where $2^P$ represents the calculation capacity of the entity to be authenticated (A) in a fixed time interval ($\Delta t_{max}$);
> - the authenticating entity (B) comprises means for choosing, in a preliminary operation, a random number w and for sending this number w to the signing entity (A), which uses this number w in its means for producing the number e; and
> - the authenticating entity (B) comprises means for measuring the time interval $\Delta t$ elapsing between the moment it sends the number w to the signing entity (A) and the moment it receives the response y from the signing entity (A), and means for verifying that the measured interval $\Delta t$ is less than the fixed time interval $\Delta t_{max}$.

21. System according to Claim 20, in which the signing entity (A) comprises means for calculating the number e from a pre-witness calculated in advance, which has a length equal to at least (k+P) bits.

22. System according to Claims 20 or 21, in which the number P is taken to be equal to 16 and the number k equal to 32, the pre-witness or the number e thus having a length equal to at least 48 bits.

**Patentansprüche**

1. Authentifizierungsverfahren, das eine erste "zu authentifizieren" genannte Entität (A) und eine zweite "authentifizierend" genannte Entität (B) verwendet, wobei dieses Verfahren die folgenden Vorgänge aufweist:

> - die zu authentifizierende Entität (A) sendet mindestens ein Commitment c an die authentifizierende Entität (B), wobei dieses Commitment eine bestimmte Größe hat, die in Anzahl von Bits gezählt wird,
> - die authentifizierende Entität (B) empfängt dieses Commitment c, wählt zufällig eine Zahl e, "Frage" genannt, und sendet diese Frage e an die zu authentifizierende Entität (A),
> - die zu authentifizierende Entität (A) empfängt die Frage e, führt diese Frage e verwendende Berechnungen durch, wobei das Ergebnis dieser Berechnungen eine Antwort y bildet, und sendet diese Antwort y an die authentifizierende Entität (B),
> - die authentifizierende Entität (B) empfängt die Antwort y, führt eine diese Antwort y verwendende Berechnung durch und prüft, ob diese Berechnung wieder das empfangene Commitment c ergibt,

wobei ein Sicherheitsgrad gleich $1-2^{-k}$ für diese Authentifizierung erhalten wird, wobei k eine ganze Zahl ist, die gemäß dem gewünschten Sicherheitsgrad festgelegt wird,
wobei dieses Verfahren **dadurch gekennzeichnet ist, dass** die authentifizierende Entität (B) das Zeitintervall ($\Delta t$) misst, das zwischen dem Augenblick, in dem sie die zu authentifizierende Entität (A) ansteuert, und dem Augenblick vergeht, in dem sie die Antwort von der zu authentifizierenden Entität (A) empfängt, und prüft, ob das gemessene Zeitintervall ($\Delta t$) kleiner ist als ein bestimmtes Zeitintervall $\Delta t_{max}$, und dass, wenn die zu authentifizierende Entität (A) eine Rechenkapazität von etwa $2^P$ in dem bestimmten Zeitintervall ($\Delta t_{max}$) hat, das von der zu authentifizierenden Entität (A) verwendete Commitment c eine Größe mindestens gleich (k+P) Bits besitzt.

2. Verfahren nach Anspruch 1, bei dem die zu authentifizierende Entität (A) das Commitment ausgehend von einem im Voraus berechneten Vor-Commitment berechnet, welches eine Größe gleich mindestens (k+P) Bits besitzt.

3. Authentifizierungsverfahren nach einem der Ansprüche 1 und 2, bei dem die Zahl P gleich 16 und die Zahl k gleich 32 genommen wird, wobei das Vor-Commitment oder das Commitment so eine Größe von mindestens 48 Bits hat.

4. Authentifizierungsverfahren nach Anspruch 1, bei dem die von der authentifizierenden Entität (B) gestellte Frage e eine Zahl von Bits größer als k besitzt.

**5.** Verfahren nach Anspruch 4, bei dem, wenn die Zahl k gleich 32 ist, die von der authentifizierenden Entität (B) gestellte Frage e eine Zahl von Bits gleich etwa 64 besitzt.

**6.** Authentifizierungsverfahren nach Anspruch 1, bei dem die authentifizierende Entität (B), in einem vorhergehenden Vorgang, zufällig eine Zahl w wählt und diese Zahl w an die zu authentifizierende Entität (A) sendet, welche diese Zahl w verwendet, um das Commitment c zu bilden, wobei die von der authentifizierende Entität (B) gestellte Frage e eine Zahl von Bits gleich k besitzt, wobei das Zeitintervall ($\Delta t$) zwischen dem Zeitpunkt, in dem die authentifizierende Entität (B) die Antwort w an die zu authentifizierende Entität sendet, und dem Zeitpunkt gemessen wird, in dem die authentifizierende Entität (B) die Antwort y der zu authentifizierenden Entität (A) empfängt.

**7.** Authentifizierungsverfahren nach Anspruch 6, bei dem die im Voraus von der authentifizierenden Entität (B) an die zu authentifizierende Entität (A) gelieferte Zahl w etwa 32 Bits besitzt, wobei das Commitment eine Größe gleich mindestens 48 Bits hat, wobei die von der authentifizierenden Entität (B) gestellte Frage e eine Zahl von Bits gleich etwa 32 hat.

**8.** Authentifizierungsverfahren nach einem der Ansprüche 1 bis 7, bei dem die zu authentifizierende Entität (A) eine Nachricht (M) in das Commitment einfügt, das sie bildet, wobei die Authentifizierung dann auch die Nachricht (M) betrifft.

**9.** Verfahren zur Signatur einer Nachricht, bei dem eine erste "signierend" genannte Entität (A) und eine zweite "authentifizierend" genannte Entität (B) eingesetzt werden, wobei dieses Verfahren die folgenden Vorgänge aufweist:

- die signierende Entität (A) berechnet eine Zahl e in Abhängigkeit von der zu signierenden Nachricht und berechnet eine Antwort genannte Zahl y, die von der Zahl e abhängt, und sendet diese Antwort an die authentifizierende Entität (B),
- die authentifizierende Entität (B) empfängt die Antwort y, führt unter Verwendung dieser Antwort y eine Berechnung durch und prüft, ob diese Berechnung wieder die Zahl e ergibt,

wobei ein Sicherheitsgrad gleich $1-2^{-k}$ für diese Signatur erhalten wird, wobei k eine ganze Zahl ist, die entsprechend dem gewünschten Sicherheitsgrad festgelegt wird,
wobei dieses Verfahren **dadurch gekennzeichnet ist, dass**:

- die signierende Entität (A) eine Zahl e berechnet, deren Größe gleich mindestens (k+P) Bits ist, wobei $2^P$ die Rechenkapazität der zu authentifizierenden Entität (A) in einem festgelegten Zeitintervall ($\Delta t_{max}$) darstellt,
- in einem vorhergehenden Vorgang die authentifizierende Entität (B) zufällig eine Zahl w wählt und diese Zahl w an die signierende Entität (A) sendet, die diese Zahl w verwendet, um die Zahl e zu bilden,
- die authentifizierende Entität (B) das Zeitintervall $\Delta t$ misst, das zwischen dem Augenblick, in dem sie die Zahl w an die signierende Entität (A) sendet, und dem Augenblick vergeht, in dem sie die Antwort y von der signierenden Entität (A) empfängt, und prüft, ob das gemessene Zeitintervall $\Delta t$ kleiner ist als das festgelegte Zeitintervall $\Delta t_{max}$.

**10.** Verfahren nach Anspruch 9, bei dem die signierende Entität (A) die Zahl e ausgehend von einem im Voraus berechneten Vor-Commitment berechnet, das eine Größe mindestens gleich (k+P) Bits besitzt.

**11.** Verfahren zur Nachrichtensignatur nach den Ansprüchen 9 und 10, bei dem die Zahl P gleich 16 und die Zahl k gleich 32 genommen wird, wobei das Vor-Commitment oder die Zahl e so eine Größe gleich mindestens 48 Bits hat.

**12.** System, das eine erste zu "authentifizieren" genannte Entität (A) und eine zweite, "authentifizierend" genannte Entität (B) aufweist, in dem:

- die zu authentifizierende Entität (A) Mittel aufweist, um mindestens ein Commitment c an die authentifizierende Entität (B) zu senden, wobei dieses Commitment eine bestimmte Größe hat, die in Anzahl von Bits gezählt wird,
- die authentifizierende Entität (B) Mittel aufweist, um dieses Commitment c zu empfangen, um zufällig eine "Frage" genannte Zahl e zu wählen und um diese Frage e an die zu authentifizierende Entität (A) zu senden,
- die zu authentifizierende Entität (A) Mittel aufweist, um die Frage e zu empfangen, um diese Frage e verwendende Berechnungen durchzuführen, wobei das Ergebnis dieser Berechnungen eine Antwort y bildet, und um diese Antwort y an die authentifizierende Entität (B) zu senden,
- die authentifizierende Entität (B) Mittel aufweist, um die Antwort y zu empfangen, um eine diese Antwort y verwendende Berechnung durchzuführen, und um zu prüfen, ob diese Berechnung wieder das empfangene Commitment c ergibt,

wobei ein Sicherheitsgrad gleich $1-2^{-k}$ für diese Authentifizierung erhalten wird, wobei k eine ganze Zahl ist, die gemäß dem gewünschten Sicherheitsgrad festgelegt wird,

wobei dieses System **dadurch gekennzeichnet ist, dass** die authentifizierende Entität (B) Mittel, um das Zeitintervall ($\Delta$t) zu messen, das zwischen dem Augenblick, in dem sie die zu authentifizierende Entität (A) ansteuert, und dem Augenblick vergeht, in dem sie die Antwort der zu authentifizierenden Entität (A) empfängt, und Mittel aufweist, um zu prüfen, ob das gemessene Zeitintervall ($\Delta$t) kleiner ist als ein bestimmtes Zeitintervall $\Delta t_{max}$, und dass, wenn die zu authentifizierende Entität (A) eine Rechenkapazität von etwa $2^P$ in dem bestimmten Zeitintervall ($\Delta t_{max}$) hat, das von der zu authentifizierenden Entität (A) verwendete Commitment c eine Größe mindestens gleich (k+P) Bits besitzt.

13. System nach Anspruch 12, bei dem die zu authentifizierende Entität (A) Mittel zur Berechnung des Commitments ausgehend von einem im Voraus berechneten Vor-Commitment aufweist, das eine Größe gleich mindestens (k+P) Bits besitzt.

14. System nach einem der Ansprüche 12 und 13, bei dem die Zahl P gleich 16 und die Zahl k gleich 32 genommen wird, wobei das Vor-Commitment oder das Commitment so eine Größe gleich mindestens 48 Bits hat.

15. System nach Anspruch 12, bei dem die von der authentifizierenden Entität (B) gestellte Frage e eine Zahl von Bits größer als k besitzt.

16. System nach Anspruch 15, bei dem, wenn die Zahl k gleich 32 ist, die von der authentifizierenden Entität (B) gestellte Frage e eine Zahl von Bits gleich etwa 64 besitzt.

17. System nach Anspruch 12, bei dem die authentifizierende Entität (B) Mittel aufweist, um in einem vorhergehenden Vorgang zufällig eine Zahl w zu wählen, und um diese Zahl w an die zu authentifizierende Entität (A) zu senden, die diese Zahl w verwendet, um das Commitment c zu bilden, wobei die von der authentifizierenden Entität (B) gestellte Frage e eine Zahl von Bits gleich k besitzt, wobei die Mittel zum Messen des Zeitintervalls ($\Delta$t) fähig sind, dieses Intervall zwischen dem Augenblick, in dem die authentifizierende Entität (B) die Zahl w an die zu authentifizierende Entität sendet, und dem Augenblick zu messen, in dem die authentifizierende Entität (B) die Antwort y von der zu authentifizierenden Entität (A) empfängt.

18. System nach Anspruch 17, bei dem die im Voraus von der authentifizierenden Entität (B) an die zu authentifizierende Entität (A) gelieferte Zahl w etwa 32 Bits besitzt, wobei das Commitment eine Größe gleich mindestens 48 Bits hat, wobei die von der authentifizierenden Entität (B) gestellte Frage e eine Zahl von Bits gleich etwa 32 hat.

19. System nach Anspruch 12, bei dem die zu authentifizierende Entität (A) Mittel aufweist, die fähig sind, eine Nachricht (M) in das Commitment einzufügen, das sie bildet, wobei die Authentifizierung dann auch die Nachricht (M) betrifft.

20. System, das eine erste "signierend" genannte Entität (A) und eine zweite "authentifizierend" genannte Entität (B) aufweist, in dem:

    - die signierende Entität (A) Mittel zur Berechnung einer Zahl e abhängig von der zu signierenden Nachricht, und zur Berechnung einer Antwort genannten Zahl y abhängig von der Zahl e, und zum Senden dieser Antwort an die authentifizierende Entität (B) aufweist,
    - die authentifizierende Entität (B) Mittel zum Empfang der Antwort y aufweist, um eine diese Antwort y verwendende Berechnung durchzuführen und um zu prüfen, ob diese Berechnung wieder die Zahl e ergibt,

    wobei ein Sicherheitsgrad gleich $1-2^{-k}$ für diese Signatur erhalten wird, wobei k eine ganze Zahl ist, die gemäß dem gewünschten Sicherheitsgrad festgelegt wird,
    wobei dieses System **dadurch gekennzeichnet ist, dass**:

    - die signierende Entität (A) Mittel aufweist, um eine Zahl e zu berechnen, deren Größe gleich mindestens (k+P) Bits ist, wobei $2^P$ die Rechenkapazität der zu authentifizierenden Entität (A) in einem festgelegten Zeitintervall ($\Delta t_{max}$) darstellt,
    - die authentifizierende Entität (B) Mittel aufweist, um in einem vorhergehenden Vorgang zufällig eine Zahl w zu wählen und diese Zahl w an die signierende Entität (A) zu senden, die diese Zahl w in ihren Mitteln verwendet, um die Zahl e zu bilden,
    - die authentifizierende Entität (B) Mittel, um das Zeitintervall $\Delta$t zu messen, das zwischen dem Augenblick, in dem sie die Zahl w an die signierende Entität (A) schickt, und dem Augenblick vergeht, in dem sie die Antwort y von der signierenden Entität (A) empfängt, und Mittel aufweist, um zu prüfen, ob das gemessene Intervall $\Delta$t kleiner ist als das festgelegte Zeitintervall $\Delta t_{max}$.

21. System nach Anspruch 20, bei dem die signierende Entität (A) Mittel aufweist, um die Zahl e ausgehend von einem im Voraus berechneten Vor-Commitment zu berechnen, das eine Größe gleich mindestens (k+P) Bits besitzt.

**22.** System nach den Ansprüchen 20 oder 21, bei dem die Zahl P gleich 16 und die Zahl k gleich 32 genommen wird, wodurch das Vor-Commitment oder die Zahl e so eine Größe gleich mindestens 48 Bits hat.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2716058 A
- FR 2752122 A

**Littérature non-brevet citée dans la description**

- How to prove yourself : Practical solutions to identification and signature problems. **A. FIAT ; A. SHAMIR.** Advances in Cryptology ; Proceedings of CRYPTO'86, Lecture Notes in Computer Science. Springer-Verlag, 1987, vol. 263, 186-194
- A practical zero-knowledge protocol fitted to security microprocessors minimizing both transmission and memory. **L.C. GUILLOU ; J.J. QUISQUATER.** Advances in Cryptology : Proceedings of EUROCRYPT'88, Lecture Notes in Computer Science. Springer-Verlag, 1988, vol. 330, 123-128
- Efficient identification and signatures for smart cards. **C.P. SCHNORR.** Advances in Cryptology : Proceedings of CRYPTO'89, Lecture Notes in Computer Science. Springer-Verlag, 1987, vol. 435, 239-252